(19) **Europäisches Patentamt European Patent Office Office européen des brevets**

(11) **EP 1 735 075 B1**

(12) **EUROPEAN PATENT SPECIFICATION**

(45) Date of publication and mention of the grant of the patent:
**17.03.2010 Bulletin 2010/11**

(51) Int Cl.:
***B01D 39/20*** (2006.01)

(21) Application number: **05729504.0**

(22) Date of filing: **24.03.2005**

(86) International application number:
**PCT/EP2005/051379**

(87) International publication number:
**WO 2005/099863 (27.10.2005 Gazette 2005/43)**

(54) **SINTERED METAL FIBER MEDIUM**

GESINTERTES METALLFASERMEDIUM

FILTRE EN FIBRES METALLIQUES FRITTEES

(84) Designated Contracting States:
**AT BE BG CH CY CZ DE DK EE ES FI FR GB GR HU IE IS IT LI LT LU MC NL PL PT RO SE SI SK TR**

(30) Priority: **15.04.2004 EP 04101536**

(43) Date of publication of application:
**27.12.2006 Bulletin 2006/52**

(73) Proprietor: **NV Bekaert SA**
**8550 Zwevegem (BE)**

(72) Inventors:
• **STOURNARAS, Constantine**
**GR-34100 Chalkida (GR)**
• **ANDREOULI, Constantina**
**GR-34100 Vathi Avlidos (GR)**
• **TATOUDI, Zoi**
**GR-34100 Chalkida (GR)**
• **VERSCHAEVE, Frank**
**B-8553 Otegem (BE)**
• **VROMANT, Carl**
**B-9840 De Pinte (BE)**
• **VAN BETSBRUGGE, Gerrit**
**B-8510 Bellegem (BE)**

(74) Representative: **Messely, Marc**
**N.V. Bekaert S.A.**
**Industrial Property Department - 6030**
**Bekaertstraat 2**
**8550 Zwevegem (BE)**

(56) References cited:
**EP-A- 0 329 863      US-A- 5 679 441**

**Description**

**Field of the invention.**

The present invention relates to a sintered metal fiber medium.

**Background of the invention.**

Sintered metal fiber media are well known in the art for numerous applications, such as e.g. liquid or gas filtration. Such sintered metal fiber medium is known from e.g. EP329863A1 or US5679441.

A disadvantage of presently known sintered metal fiber media, is that, in case such media are to be used as a surface filter, such media are difficult to clean, e.g. by back pulsing, back flushing or back washing. Apparently, at least a small part of the filtered particles cannot be removed out of the sintered metal fiber medium, even when care is taken to provide a smooth surface to the medium, in order to prevent anchoring of particles to the media surface. These particles which stay in the medium, tends to obstruct the flow through the medium over a long time.

Sintered metal fiber medium may be provided in many different ways, but these ways are essentially based on two types of methods.

A first method for providing sintered metal fiber medium is to provide a metal fiber web by air lay down, and sintering this air laid web in appropriate furnaces.

A disadvantage of this air lay down web, is the fact that the web is usually relatively inhomogeneous, especially when relatively thin sintered metal fiber medium are to be provided. This because the air laid webs can hardly be provided sufficiently homogeneous, and therefore, to have a sintered metal fiber medium with homogenous properties over its surface, usually several air laid webs are stacked (so-called doubled). In case very fine metal fibers are to be used, this homogeneity is even more a problem.

An other method to provide a web, prior to sintering operation, is to use the so-called wet lay down method or paper making method, as described in JP61-225400 and JP61-223105. The metal fibers are brought in a slurry, which slurry is poured on a screen. The water is sucked from the slurry through the screen. The remaining dewatered slurry is then sintered. A binding agent may be used to temporarily bind the metal fibers to each other and so to make the dewatered slurry transportable. This dewatered green material is then sintered, possibly first debinding the binding agent.

A disadvantage of the wet webbing is that in case that thin and relatively short fibers are used, some of the shorter fibers are sucked through the screen, together with the water being removed from the slurry. In case of thin webs made prior to sintering, the dewatering step may suck small or larger holes in the web where no fibers are retained for sintering. Also, an imprint of the supporting net, used to support the wet slurry during dewatering, is obtained. The net pattern is noticed on the dewatered web as a repetitive thinner spots.

As a result, the dewatered slurry and thus the sintered metal fiber medium, may have inhomogeneous zones where less fibers are present, even when several layers of the freshly dewatered webs are stacked one to the other prior to sintering.

Especially in case fibers with small equivalent diameter, e.g. $2\mu m$ to $6\mu m$, are used, the phenomena of sucking fibers with the water during dewatering is noticed. This because usually the amount of fibers with smaller lengths is larger, the finer the fibers are. As a result, more fibers with a short length are sucked with the water during dewatering in case of fibers with small equivalent diameter.

**Summary of the invention.**

It is an object of the present invention to provide a sintered metal fiber medium which overcomes the drawbacks of prior art.

It is an other object of the present invention to provide a sintered metal fiber medium which may be cleaned, e.g. by back pulsing, back flushing or back washing, more effectively.

It is further an object of the present invention to provide a sintered metal fiber medium comprising fine metal fibers, which has homogeneous properties over its surface, even when the metal fiber medium is thin.

It is further an object of the present invention to provide a sintered metal fiber medium having an improved filter efficiency, even for decreased medium thickness.

A sintered metal fiber medium as subject of the invention comprises at least a first metal fiber layer which metal fibers of this layer have an equivalent diameter D1. This first metal fiber layer provides a first outer surface to the sintered metal fiber medium. A sintered metal fiber medium as subject of the invention has a mean flow pore size of less than 2 times the equivalent diameter D1.

With equivalent diameter of a metal fiber is meant the diameter of an imaginary circle having the same surface as the surface of a radial cross section of the fiber.

The mean flow pore size is measured using a "Coulter Porometer II" testing equipment, which performs measurements of the mean flow pore size according to ASTM F-316-80.

The metal fibers of the first metal fiber layer all have an individual fiber length. As some distribution on these fiber lengths may occur, due to the method of manufacturing the metal fibers, the metal fibers of the first metal fiber layer of a sintered metal fiber medium as subject of the invention are preferably characterized using the average fiber length L1. This length is determined by measuring a significant number of fibers present in the first metal fiber layer, according to appropriate statistical standards. The average fiber length of the metal fibers in the first metal fiber layer may be smaller than 10mm, e.g. smaller than 6mm, preferably smaller than 1 mm, such as smaller than 0.8mm or even smaller than 0.6mm such as smaller than 0.2mm.

A sintered metal fiber medium as subject of the invention is **characterized in that** the metal fibers in the first metal fiber layer i n the sintered metal fiber medium have a ratio of average fiber length over diameter (L1/D1) which is preferably less than 110, more preferred less than 105 or even less than 100, but usually more than 30. An L1/D1 of about 30 to 70 is preferred for metal fibers with equivalent diameter in the range up to $6\mu m$, in case the metal fibers are obtained by the pro cess as described in WO02/057035, hereby incorporated by reference.

Surprisingly it was found that a sintered metal fiber medium as subject of the invention can be cleaned repetitively, e.g. by back flush, with high efficiency and apparently with a restricted or even no particles retained after cleaning. Although the reason is not completely understood, apparently a combination of such small mean pore flow size as compared to the equivalent fiber diameter, for which either particular production methods are to be used as will be described further, or for which additional treatments are to be given to the sintered metal fiber medium after sintering, as e.g. explained in EP329863A1 in order to obtain such small mean pore flow size, combined with a use of metal fibers whose L/D is less than 110, seems to provide such advantageous behavior during back pulsing, back washing or back flushing o the sintered metal fiber medium.

Preferably the equivalent diameter D1 of the metal fibers of the first layer of the sintered metal fiber medium is less than $100\mu m$ such as less than $65\mu m$, more preferably less than $36\mu m$ such as $35\mu m$, $22\mu m$ or $17\mu m$. Possibly the equivalent diameter of the metal fibers is less than $15\mu m$, such as $14\mu m$, $12\mu m$ or $11\mu m$, or even more preferred less than $9\mu m$ such as e.g. $8\mu m$. Most preferably the equivalent diameter D1 of the metal fibers is less than $7\mu m$ or less than $6\mu m$, e.g. less than $5\mu m$, such as $1\mu m$, $1.5\mu m$, $2\mu m$, $3\mu m$, $3.5\mu m$, or $4\mu m$.

Preferably it was found that the sintered metal fiber medium has a mean flow pore size of less than 1.5 times said equivalent diameter D1. More preferred, the mean flow pore size of the sintered metal fiber media as subjects of the invention is equal or less than the equivalent diameter D1 of the metal fibers of the first metal fiber layer of the sintered metal fi ber medium, increased by one $\mu m$. This is the case in particular when metal fibers are used, having an equivalent diameter D1 of equal or less than $6\mu m$, and more in particular when the equivalent diameter D1 is less than $5\mu m$. Most preferred, metal fibers, either bundle drawn or coil shaved, are used, which have been subjected to a reduction of fiber length by means of a process as described in WO02/057035.

Any type of metal or metal alloy may be used to provide the metal fibers. The metal fibers are for example made of steel such as stainless steel. Preferred stainless steel alloys are AISI 300 or AISI 400-serie alloys, such as AISI 316L or AISI 347, or alloys comprising Fe, Al and Cr, stainless steel comprising Chromium, Aluminum and/or Nickel and 0.05 to 0.3 % by weight of Yttrium, Cerium, Lanthanum, Hafnium or Titanium, such as e.g. DIN 1.4767 alloys or Fecralloy®, are used. Also Cupper or Copper-alloys, or Titanium or Titanium alloys may be used. The metal fibers can also be made of Nickel or a Nickel alloy.

Metal fibers may be made by any presently known metal fiber production method, e.g. by bundle drawing operation, by coil shaving operation as described in JP3083144, by wire shaving operations (such as steel wool) or by a method providing metal fibers from a bath of molten metal alloy.

In order to provide the metal fibers with their average length, the metal fibers may be cut using the method as described in WO02/057035, or by using the method to provide metal fiber grains such as described in US4664971.

The thickness of the first metal fiber layer of the sintered metal fiber medium may vary over a large range, but relatively thin first metal fibers layers may be obtained, e.g. layers with thickness less than or equal to 0.2mm or even less than or equal to 0.1 mm. Even more surprising, it was found that sintered metal fiber media having such first metal fiber layers with thickness less than 0.2 mm or less than 0.1 mm, a bubble point pressure of more than 10000Pa may be obtained. It was also noticed that a high filtration efficiency may be obtained when such sintered metal fiber media having a first metal fiber layers with thickness less than 0.2 mm or less than 0.1 mm are used as a liquid filter.

The bubble point pressure is measured using according to the ISO 4003 testing method.

The weight of the first metal fiber layer of the sintered metal fiber medium as subject of the invention is preferably less than $500g/m^2$, more preferred less than $400 g/m^2$ or even less than $300g/m^2$ such as less than $100g/m^2$ e.g. less than $40g/m^2$ or even less than $30g/m^2$.

The porosity of the sintered metal fiber medium may vary over a large range, but it was found that such sintered metal fiber medium may have a porosity in the range of 40% to 99%, e.g. less than or equal to 80%, such as in the range of 55% to 80%, more preferred less than or equal to 70%, such as in the range of 55% to 70%. The term "porosity" P is to be understood as

$$P = 100 \cdot (1 - d)$$

wherein

$$d = (\text{weight of 1 m}^3 \text{ metal fiber layer}) / (SF)$$

wherein
SF = specific weight per m$^3$ of alloy out of which the metal fibers of the metal fiber layer are provided.

A sintered metal fiber medium as subject of the invention may consist of the first metal fiber layer. Alternatively, it is understood that next to the first metal fiber layer providing a first outer surface to the sintered metal fiber medium as subject of the invention, the sintered metal fiber medium may comprise an additional porous metal structure. This porous metal structure may be a metal mesh, e.g. a metal welded or braided grid, or expanded metal sheet. The porous metal structure may comprise also one or more additional metal fiber layers. The porous metal structure may as well comprise one or more additional metal fiber layers and a metal mesh, e.g. a metal welded or braided grid, or expanded metal sheet.
Preferably the equivalent diameter D2 of the metal fibers of a second metal fiber layer is larger than the equivalent diameter D1 of the metal fibers of the first metal fiber layer.
Preferably the average fiber length L2 of the metal fibers of a second metal fiber layer is larger than the average fiber length L1 of the metal fibers of the first metal fiber layer.

It is understood that the first metal fiber layer and the additional layers of the porous structure are sintered to each other, either in one sintering operation, or after each or some of the layers have been sintered individually. The porosity of the porous metal structure, and of its element and or layers, is preferably larger than the porosity of the first metal fiber layer.

As the first metal fiber layer provides a first outer surface of the sintered metal fiber structure, advantageously this outer surface has a substantially flat surface. With substantially flat is meant that the Ra value, measured over a statistically relevant length, is less than three times the equivalent diameter D1 of the metal fibers present on the first outer layer of the sintered metal fiber medium. More preferred, Ra value of the first outer surface of the sintered metal fiber medium is less then the equivalent diameter D1, for example less than 0.5 times the equivalent diameter D1.

Ra value is defined as the arithmetic mean deviation of the surface height from the mean line through the measured profile from the measured length. The mean line is defined so that equal areas of the profile lie above and below the line.

Although not to be understood as limiting, a method to provide the first metal fiber layer of the sintered metal fiber medium as subject of the invention, comprises the steps of:

- providing metal fibers with appropriate equivalent diameter D1 and average fiber length L1, for which D1/L1 is less than 110;
- making a slurry comprising the metal fibers and a binding agent by mixing the metal fibers and the binding agent.;
- tape casting a layer of this slurry on a support using an applicator such as a doctor blade ;
- solidifying the cast slurry, providing a foil comprising the metal fibers and the binding agent;
- debinding the binding agent in the foil and sintering the metal fibers, so obtaining a sintered metal fiber first layer.

In a first step, metal fibers are provided.

In the second step of the method as subject of the invention, preferably the slurry is provided using metal fibers, a binding agent and a solvent, for dissolving the binding agent. Most preferred, a water solvable binding agent is used, and a solvent being water is applied.

Preferably the slurry, comprising metal fiber, a solvent and a binding agent, preferably has a metal fiber concentration in the range of 2% weight to 40% weight of the slurry. Preferably 5% weight to 15% weight of the slurry is provided by metal fibers. It was found that the smaller the equivalent diameter of the metal fibers, the lower the concentration of metal fibers is kept.

Alternatively, the slurry comprises a polymer binding agent and metal fibers, which polymer binding agent is heated to reduce its viscosity.

A binding agent for the purpose of the invention is to be understood as a product for thickening the slurry.

Preferably a water soluble binding agent is used, e.g. polyvinyl alcohols, methyl cellulose ethers, hydroxypropylmethylcellulose, polyethers from ethyleneoxide, acrylic acid polymers or acrylic copolymers. The binding agent is added to the solvent, in a concentration of preferably between 0.5% weight and 30 %weight of the slurry. Most preferred, a binding agent is chosen which requires a concentration of less than 20% weight or even less than 15 % weight or even less than 10% weight of the slurry, in order to provide the required viscosity. A viscosity range between 1000 cPs and 20000 cPs is preferably used for the slurry. The components of the slurry are blended using appropriate mixing equipment. In case foaming of the slurry occurs, small amounts of a defoaming component is added.

The slurry is than tape cast using an applicator such as a doctor blade on a, preferably substantially flat, surface. The clearance of the applicator is kept relatively small, this is preferably between 0.2mm and 6mm, such as smaller than 3mm.

The clearance and thus the thickness of the layer of the slurry is chosen in function of the amount of metal fibers in the slurry, the required weight per surface unit of the sintered metal fiber medium, and the required density of the sintered metal fiber medium.

In a next step, the cast slurry is solidified, forming a foil which comprises the binding agent and the metal fibers. This is done by evaporating all the solvent. A solvent may be used which evaporates easily at ambient temperature. The evaporation may be executed as a drying step in case water was used as solvent, whereby all water is evaporated from the slurry. The solidification step may be executed as evaporation of the solvent, forced by heating the cast slurry, e.g. by forcing heated air over the surface of the cast slurry, or by radiating, e.g. IR-radiating or microwave radiation. It is understood that only the solvent, e.g. water, is evaporated which was not chemically bound to the binding agent.

It is understood that, in case all solvent is evaporated, the thickness of the cast slurry is reduced up to some extent, as the volume of the slurry is reduced to provide the volume of the foil.

Alternatively, the binding agent is solidified by cooling the cast slurry in case the binding agent was heated in order to reduce its viscosity.

Possibly, the foil is pressed and its thickness is reduced, prior to debinding and sintering. This in order to decrease the porosity of the sintered metal fiber layer which will be obtained after sintering, and to smoothen the outer surface of the first metal fiber layer.

In a final step, the foil comprising the metal fibers and the binding agent is first subjected to thermal treatment, for debinding of the binding agent, and consecutively to sinter the metal fibers to each other.

Such debinding and sintering may be done in one thermal operation, or may be executed as two consecutive operations, not necessarily being done immediately one after the other.

Possibly, several layers of foil may be stacked to form a layered medium. The different foils are not to comprise identical metal fibers, nor should they be of an identical metal fiber content per surface unit or volume. The different foils may differ from each other in metal fibers, metal fiber content, thickness, weight and other properties.

Possibly, other porous metal structures may be stacked to one or more foils. As an example, a metal wire mesh, an expanded metal sheet or one or more layers of air laid web, wet laid web or a layer of metal powder may be added to the foils comprising metal fibers and a binding agent.

Possibly, a metal foil or a metal plate is added to the stack.

After sintering, the sintered metal fiber medium may further be subjected to a compression , e.g. rolling or calendaring, in order to further reduce the thickness of the sintered metal fiber medium, or to smoothen the surface of the sintered metal fiber medium.

Apparently, such method as subject of the invention results in a sintered metal fiber medium which has both all metal fibers in the medium, so the UD ratio of metal fibers in the sintered metal fiber medium does not significantly differ from the ratio of the fibers prior to production of the medium, and in the mean time, the distribution of the fibers in the medium is more uniform, so a mean pore flow size of less than three times the equivalent fiber diameter can be obtained. It is assumed that the latter is caused most by a larger amount of solvent used in the slurry, and the removal of all of the solvent by evaporation.

An additional porous structure may be provided to the sintered metal fiber medium as subject of the invention, by sintering in a second sintering operation this porous structure to the first metal fiber layer. Alternatively, the porous structure is provided to the foil (either compressed or not) before the debinding and sintering of the first metal fiber layer.

It was noticed that, disregarding the value of physical properties, the sintered metal fiber media obtained by such method, have physical properties which are more homogeneous over the medias surface as compared to media made using a method as was known in the art.

A sintered metal fiber medium as subject of the invention may advantageously be used as filter medium, for filtration of particulates from fluids, either gas or liquid, e.g. by surface filtration. As an example, the sintered metal fiber medium may be used for soot filtration, or for filtration of beverages, such as beer, wine, or for filtration of oils or coolants. The sintered metal fiber medium may also be used in fuel cells.

## Brief description of the drawings.

The invention will now be described into more detail with reference to the accompanying drawings wherein

- FIGURE 1 shows schematically a sintered metal fiber medium used in a surface filter application.
- FIGURE 2 shows the yield of liquid flowing through a sintered metal fiber medium after back pulse, expresses as a percentage of the yield of the green filter, in function of the numbers of cleaning by back pulsing.

## Description of the preferred embodiments of the invention.

As a preferred embodiment of the present invention, a sintered metal fiber medium comprising $2\mu$m equivalent diameter fibers is made using a method comprising the steps of

- Providing metal fibers by bundle drawing;
- Reduction of fiber length using the method as in WO02/057035;
- Making a slurry of these fibers, a binding agent and a solvent;
- Tape casting this slurry ;
- Drying this tape cast slurry by evaporation of all solvent in the cast slurry;
- Making a stack of dried tape cast layers;
- Debinding the stacked dried tape cast layers;
- Sintering the metal fibers;
- Compression of the sintered metal fiber medium.

Alternatively, the foil was compressed prior to debinding and sintering.

In a first step, metal fibers with equivalent diameter D1 of $2\mu$m, made by means of bundle drawing processes, are provided. The endless metal fibers are cut into metal fibers having an average length L1 of $109\mu$m, using the method of WO02/057035. The metal fibers were provided out of AISI 316L alloy. L1/D1 thus is 54.5.

Hereafter, a slurry was made using following composition:

9.09% weight of the slurry being metal fibers,
1.36% weight of the slurry being methyl cellulose ether (being binding agent)
89.55% weight of the slurry being water (being the solvent).

The slurry was tape cast using a doctor blade having a clearance of 1.5mm.

Such cast slurry was solidified by drying to the air for about 24h. Alternatively, IR-radiation may be used to heat the cast slurry and assist the drying operation. A foil was obtained comprising the binding agent with chemically bound water and metal fibers. A foil was obtained having a thickness of 251 $\mu$m and having a weightof 127 g/m$^2$. The non-sintered metal fiber medium comprised again 13% weight of binding agent, and 87% weight of metal fibers.

Several foils were stacked to provide a layered foil of about 400g/m$^2$.

The stack of foils, in this case 4 layers, is subjected for about 30 minutes to a temperature of 400°C under ambient atmosphere for debinding the binding agent. Consecutively, the debound material was sintered at 1100°C for about 30 minutes under H2. The metal fibers of all layers of foil are sintered to each other.

The sintered metal fiber medium obtained was rolled to a porosity of 65%, having a weight of about 369g/m$^2$. The sintered metal fiber medium has a bubble point pressure of 9470Pa and a mean flow pore size of 2.9$\mu$m.

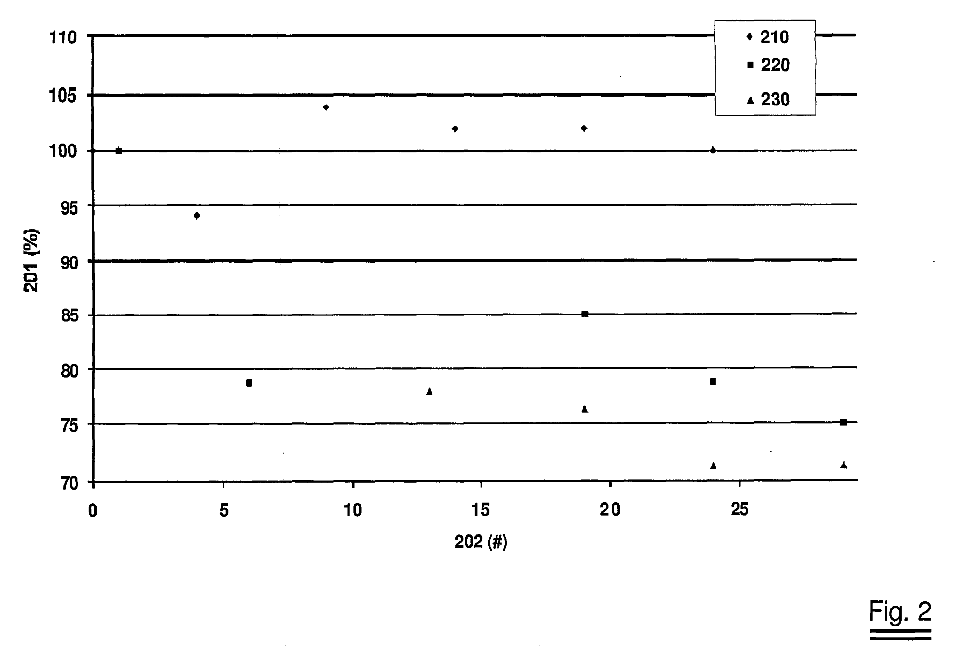

An alternative sintered metal fiber medium as subject of the invention was obtained in an identical way, however only 3 layers of metal fibers and binder were stacked prior to sintering. A sintered metal fiber medium as subject of the invention was obtained comprising metal fibers out of AISI 316L stainless steel having an equivalent diameter of 2$\mu$m, and an UD of 54.5. the porosity of the sintered metal fiber medium was 65%, a weight per surface of 300 g/m$^2$, a mean flow pore size of 3.4$\mu$m was achieved, meanwhile having a bubble point pressure of 9444 Pa. This sintered metal fiber medium as subject of the invention was hereafter used as sintered metal fiber medium as subject of the invention in FIGURE 2.

Possibly, a metal wire mesh is added to the sintered metal fiber product, and again subjected to a sintering operation under high vacuum atmosphere at about 1050 °C for 60 minutes. The mesh may as well be added to the stack of foils made prior to the first sintering operation.

Using similar steps, a sintered metal fiber product may be obtained, when using metal fibers of 1.5$\mu$m diameter, having a substantially similar UD. The obtained sintered metal fiber medium have a weight of about 333g/m$^2$ and a porosity of 65%. The sintered metal fiber medium has a bubble point pressure of 13609Pa and a mean flow pore size of 2.4$\mu$m. An Ra of 0.99$\mu$m was obtained.

For both embodiments, under several circumstances, a retention of more than 99.95% of all particles having a diameter of 0.51 µm may be retained.

A sintered metal fiber medium may be used for surface filtration of solid particulates from gasses, such as exhaust gasses, or liquids such as oils or beverages.

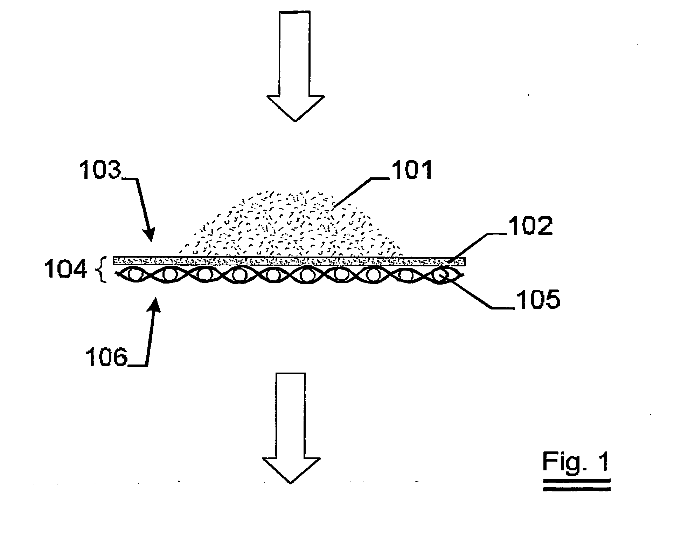

As shown in FIGURE 1, the particulates 101 are withhold to penetrate in the sintered metal fiber medium 102 as the mean flow pore size is kept very small at the inflow surface 103 of the filter medium 104, being an outer surface of the sintered metal fiber medium 102 providing this inflow surface 103 of the filter medium 104. A metal mesh 105, possibly sintered to the sintered metal fiber medium 102, positioned at the outflow side 106 of the filter medium 104, may provide pressure resistance of the filter medium 104.

A similar sintered metal fiber medium as subject of the invention was provided using substantially identical process parameters, except that only two layers of solidified metal fibers and binding agent were provided, each having a weight of 230 g/m$^2$. The metal fibers used were stainless steel AISI 316L fibers with an equivalent fiber diameter of 1.5µm, and an average length over diameter (l/D) of 50. The two layers were put one on top of the other prior to sintering. After sintering, a sintered metal fiber medium of 0.1mm thickness and a weight of 400 g/m$^2$ with porosity of 50% was obtained. A mean flow pore size of 1.7174µm and a bubble point pressure of 13400 Pa was obtained.

The Ra of this sintered metal fiber medium was 0.525µm

As shown in FIGURE 2, the sintered metal fibermedium as described above was subjected to a test in which the sintered metal fiber medium was used as a filter medium for filtering a liquid (80%vol water, 20% vol ethanol) with particles of Pural, being Aluminum oxide particles having a size distribution of which 10 % vol of the particles have a diameter less than 1µm, 50 % vol of the particles have a diameter less than 5µm and 90 % vol of the particles have a diameter less than 23µm. After 3.5 minutes of loading , the filter was cleaned by a back pulse.

The yield of liquid flowing through the sintered metal fiber medium after back pulse, expresses as a percentage of the yield of the green filter, was set out in ordinate 201, in function of the numbers 202 of cleaning by back pulsing. As shown in FIGURE 2, curve 210 of the sintered metal fiber medium as subject of the invention reveals that after each cleaning operation, a substantially identical yield is obtained. This indicates that the back pulse always removed substantially all particles filtered by the sintered metal fiber medium.

Curves 220, 230 and 240 are curves of sintered metal fiber medium of prior art, subjected to the same test set-up. Curve 220 is a sintered metal fiber medium which was provided from 2µm equivalent diameter fibers of AISI 316L, said medium having a porosity of 65% and a weight of 300 g/m$^2$, a mean flow pore size of 3.34µm, and an UR of approximately 2500. The medium was provided by air lay-down webs. Curve 230 is a sintered metal fiber medium which was provided from 2µm equivalent diameter fibers of AISI 316L, said medium having a porosity of 65% and a weight of 300 g/m$^2$, a mean flow pore size of 3.32µm, and an UR of 1500. The medium was provided by wet webbing and dewatering the slurry according to known paper making technology.

It is clear from these curves, obtained using prior art sintered metal fiber medium, that the cleabebility of the sintered metal fiber medium according to the prior art, is well improved by using a sintered metal fiber medium as subject of the invention. On sintered metal fiber medium as of prior art, the medium is not completely cleaned, which causes significant yield losses after repetitive cleaning operations.

**Claims**

1. A sintered metal fiber medium comprising at least a first metal fiber layer providing a first outer surface to said sintered metal fiber medium, said first metal fiber layer comprising metal fibers having an equivalent diameter D1, said medium has a mean flow pore size of less than 2 times said equivalent diameter D1, **characterized in that** said metal fibers of said first metal fiber layer have an average fiber length L1, the ratio L1/D1 being less than 110.

2. A sintered metal fiber medium as in claim 1, wherein said equivalent diameter is less than 5µm.

3. A sintered metal fiber medium as in any one of the claims 1 to 2, wherein said first metal fiber layer thickness is less than 0.2mm.

4. A sintered metal fiber medium as in any one of the claims 1 to 3, wherein said mean flow pore size is less than 1.5 times said equivalent diameter.

5. A sintered metal fiber medium as in any one of the claims 1 to 4, wherein said mean flow pore size is less than 3.5µm.

6. A sintered metal fiber medium as in any one of the claims 1 to 5, wherein said medium has a porosity of less than 80%.

7. A sintered metal fiber medium as in any one of the claims 1 to 6, wherein said medium has a porosity of less than 70%.

8. A sintered metal fiber medium as in any one of the claims 1 to 7, wherein said medium has a bubble point pressure of more than 10000 Pa.

9. A sintered metal fiber medium as in any one of the claims 1 to 8 wherein said medium consists of said first metal fiber layer.

10. A sintered metal fiber medium as in any one of the claims 1 to 8, wherein said medium comprising a porous metal structure, being sintered to said first metal fiber layer.

11. A sintered metal fiber medium as in claim 10, wherein said porous metal structure is a metal mesh.

12. A sintered metal fiber medium as in claim 10, wherein said porous metal structure comprises a second metal fiber layer, said second metal fiber layer comprising metal fibers having an equivalent diameter D2 larger than said equivalent diameter D1 of said metal fibers of said first metal fiber layer.

13. A sintered metal fiber medium as in claim 12, wherein said porous metal structure comprises further comprising a metal mesh being sintered to said second metal fiber layer.

14. A sintered metal fiber medium as in any one of the claims 1 to 13, wherein said first outer surface of the sintered metal fiber medium has a Ra value less than three times the equivalent diameter D1.

15. The use of a sintered metal fiber medium as in any one of the claims 1 to 14 for surface filtration application of solid particles from gasses or liquids.

16. The use of a sintered metal fiber medium as in claim 15 for wine filtration.

**Patentansprüche**

1. Gesintertes Metallfasermedium, mindestens eine erste Metallfaserschicht umfassend, die eine erste Außenfläche des gesinterten Metallfasermediums bereitstellt, wobei die erste Metallfaserschicht Metallfasern mit einem äquivalenten Durchmesser D1 aufweist und wobei das Medium eine mittlere Durchflussporengröße von weniger als dem Doppelten des äquivalenten Durchmessers D1 aufweist, **dadurch gekennzeichnet, dass** die Metallfasern der ersten Metallfaserschicht eine durchschnittliche Faserlänge L1 aufweisen und das Verhältnis L1/D1 kleiner als 110 ist.

2. Gesintertes Metallfasermedium nach Anspruch 1, wobei der äquivalente Durchmesser kleiner als 5 μm ist.

3. Gesintertes Metallfasermedium nach einem der Ansprüche 1 bis 2, wobei die Dicke der ersten Metallfaserschicht kleiner als 0,2 mm ist.

4. Gesintertes Metallfasermedium nach einem der Ansprüche 1 bis 3, wobei die mittlere Durchflussporengröße kleiner als das 1,5fache des äquivalenten Durchmessers ist.

5. Gesintertes Metallfasermedium nach einem der Ansprüche 1 bis 4, wobei die mittlere Durchflussporengröße kleiner als 3,5 μm ist.

6. Gesintertes Metallfasermedium nach einem der Ansprüche 1 bis 5, wobei das Medium eine Porosität von weniger als 80 % aufweist.

7. Gesintertes Metallfasermedium nach einem der Ansprüche 1 bis 6, wobei das Medium eine Porosität von weniger als 70 % aufweist.

8. Gesintertes Metallfasermedium nach einem der Ansprüche 1 bis 7, wobei das Medium einen Blasenpunktdruck von mehr als 10000 Pa aufweist.

9. Gesintertes Metallfasermedium nach einem der Ansprüche 1 bis 8, wobei das Medium aus der ersten Metallfaserschicht besteht.

10. Gesintertes Metallfasermedium nach einem der Ansprüche 1 bis 8, wobei das Medium eine poröse Metallstruktur umfasst, die an die erste Metallfaserschicht gesintert ist.

11. Gesintertes Metallfasermedium nach Anspruch 10, wobei die poröse Metallstruktur ein Metallgitter ist.

12. Gesintertes Metallfasermedium nach Anspruch 10, wobei die poröse Metallstruktur einer zweite Metallfaserschicht umfasst, wobei die zweite Metallfaserschicht Metallfasern mit einem äquivalenten Durchmesser D2 umfasst, der größer ist als der äquivalente Durchmesser D1 der Metallfasern der ersten Metallfaserschicht.

13. Gesintertes Metallfasermedium nach Anspruch 12, wobei die poröse Metallstruktur ferner ein Metallgitter umfasst, das an die zweite Metallfaserschicht gesintert ist.

14. Gesintertes Metallfasermedium nach einem der Ansprüche 1 bis 13, wobei die erste Außenfläche des gesinterten Metallfasermediums einen Ra-Wert aufweist, der kleiner als das Dreifache des äquivalenten Durchmessers D1 ist.

15. Verwendung eines gesinterten Metallfasermediums nach einem der Ansprüche 1 bis 14 als Oberflächenfilteranwendung zum Ausfiltern fester Partikel aus Gasen oder Flüssigkeiten.

16. Verwendung eines gesinterten Metallfasermediums nach Anspruch 15 für das Filtern von Wein.

**Revendications**

1. Filtre en fibres métalliques frittées comprenant au moins une première couche de fibres métalliques fournissant une première surface externe audit filtre en fibres métalliques frittées, ladite première couche de fibres métalliques comprenant des fibres métalliques ayant un diamètre équivalent D1, ledit filtre ayant une taille moyenne de pore d'écoulement inférieure à 2 fois ledit diamètre équivalent D1, **caractérisé en ce que** lesdites fibres métalliques de ladite première couche de fibres métalliques ont une longueur moyenne de fibre L1, le rapport L1/D1 étant inférieur à 110.

2. Filtre en fibres métalliques frittées selon la revendication 1, dans lequel ledit diamètre équivalent est inférieur à 5 $\mu$m.

3. Filtre en fibres métalliques frittées selon l'une quelconque des revendications 1 et 2, dans lequel l'épaisseur de ladite première couche de fibres métalliques est inférieure à 0,2 mm.

4. Filtre en fibres métalliques frittées selon l'une quelconque des revendications 1 à 3, dans lequel ladite taille moyenne de pore d'écoulement est inférieure à 1,5 fois ledit diamètre équivalent.

5. Filtre en fibres métalliques frittées selon l'une quelconque des revendications 1 à 4, dans lequel ladite taille moyenne de pore d'écoulement est inférieure à 3,5 $\mu$m.

6. Filtre en fibres métalliques frittées selon l'une quelconque des revendications 1 à 5, ledit filtre ayant une porosité inférieure à 80 %.

7. Filtre en fibres métalliques frittées selon l'une quelconque des revendications 1 à 6, ledit filtre ayant une porosité inférieure à 70 %.

8. Filtre en fibres métalliques frittées selon l'une quelconque des revendications 1 à 7, ledit filtre ayant une pression au point de bulle supérieure à 10 000 Pa.

9. Filtre en fibres métalliques frittées selon l'une quelconque des revendications 1 à 8, ledit filtre consistant en ladite première couche de fibres métalliques.

10. Filtre en fibres métalliques frittées selon l'une quelconque des revendications 1 à 8, ledit filtre comprenant une structure métallique poreuse, étant frittée à ladite première couche de fibres métalliques.

**11.** Filtre en fibres métalliques frittées selon la revendication 10, dans lequel ladite structure métallique poreuse est un filet métallique.

**12.** Filtre en fibres métalliques frittées selon la revendication 10, dans lequel ladite structure métallique poreuse comprend une deuxième couche de fibres métalliques, ladite deuxième couche de fibres métalliques comprenant des fibres métalliques ayant un diamètre équivalent D2 plus grand que ledit diamètre équivalent D1 desdites fibres métalliques de ladite première couche de fibres métalliques.

**13.** Filtre en fibres métalliques frittées selon la revendication 12, dans lequel ladite structure métallique poreuse comprend en outre un filet métallique étant fritté à ladite deuxième couche de fibres métalliques.

**14.** Filtre en fibres métalliques frittées selon l'une quelconque des revendications 1 à 13, ladite première surface externe dudit filtre en fibres métalliques frittées ayant une valeur Ra inférieure à trois fois le diamètre équivalent D1.

**15.** Utilisation d'un filtre en fibres métalliques frittées selon l'une quelconque des revendications 1 à 14 pour une application de filtration de surface de particules solides à partir de gaz ou de liquides.

**16.** Utilisation d'un filtre en fibres métalliques frittées selon la revendication 15 pour la filtration du vin.

Fig. 1

Fig. 2

EP 1 735 075 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 329863 A1
- US 5679441 A
- JP 61225400 A
- JP 61223105 A

- WO 02057035 A
- JP 3083144 B
- US 4664971 A